# EUROPÄISCHE PATENTANMELDUNG

(11) **EP 4 520 465 A1**
(43) Veröffentlichungstag der Anmeldung: **12.03.2025**
(21) Anmeldenummer: 24194871.0
(22) Anmeldetag: 16.08.2024
(51) Int. Cl.: B23C 3/00, B26D 7/08

(54) **VERFAHREN UND VORRICHTUNG ZUR FRÄSENDEN BEARBEITUNG EINES WERKSTÜCKS**

(30) Priorität: 31.08.2023 DE 102023123528
(71) Anmelder: Avantec Zerspantechnik GmbH, 75428 Illingen (DE)
(72) Erfinder: Abel, Pierre, 75428 Illingen (DE); Werthwein, Uli, 75428 Illingen (DE)
(74) Vertreter: Grauel, Andreas

(57) **Zusammenfassung**

Die Erfindung betrifft ein Verfahren zur fräsenden Bearbeitung eines Werkstücks (2), mit einem rotierenden Fräskopf (3) mit zumindest einem Werkzeug (4) mit zumindest einer Schneide (5), wobei der rotierende Fräskopf (3) mit dem zumindest einen Werkzeug (4) mit der zumindest einen Schneide (5) mit einer definierten Drehzahl betrieben wird und mit einer definierten Vorschubrichtung und mit einer definierten Vorschubgeschwindigkeit entlang des Werkstücks (2) zum Spanabheben geführt wird, wobei dem eine hochfrequente und in der Richtung ausgerichtete Impulsbelastung (8) überlagert wird. Auch betrifft die Erfindung eine diesbezügliche Vorrichtung (1).

## Beschreibung

### Technisches Gebiet

Die Erfindung betrifft ein Verfahren zur fräsenden Bearbeitung eines Werkstücks und eine diesbezügliche Vorrichtung.

### Stand der Technik

Verfahren und Vorrichtungen zur fräsenden Bearbeitung eines Werkstücks sind im Stand der Technik hinreichend bekannt. Dabei wird in der Vorrichtung ein Werkstück in einer Werkstückaufnahme befestigt angeordnet, insbesondere eingespannt angeordnet, wobei ein sich drehender Fräskopf mit zumindest einem Werkzeug mit einer Schneide unter einer Vorschubrichtung und mit einer Vorschubgeschwindigkeit an dem Werkstück vorbeigeführt wird, um spanabhebend mittels eines geometrisch bestimmten Spans Material von dem Werkstück mittels der rotierenden Schneide abzutragen.

Hierbei sind insbesondere aus wirtschaftlicher Sicht als Kenngrößen das zerspante Volumen pro Zeiteinheit, der erforderliche Energieeinsatz bezogen auf das zerspante Volumen sowie die Standzeit des eingesetzten Werkzeugs entscheidend. Hierzu werden typischerweise optimierte Schneidengeometrien und spezielle Werkstoffe für die Schneiden eingesetzt oder die Schneiden werden mit besonderen Beschichtungen versehen, um das zerspante Volumen pro Zeiteinheit und die Standzeit zu vergrößern, um die Wirtschaftlichkeit zu verbessern. Aktuell scheinen jedoch die diesbezüglichen Grenzen erreicht zu sein und es werden zukünftig nur eher geringe Verbesserungen bezüglich der oben genannten Kenngrößen erwartet.

### Darstellung der Erfindung, Aufgabe, Lösung, Vorteile

Es ist die Aufgabe der Erfindung, ein Verfahren zu schaffen, welches erlaubt, das zerspante Volumen pro Zeiteinheit zu verbessern und/oder den erforderlichen Energieeinsatz bezogen auf das zerspante Volumen zu reduzieren und/oder die Standzeit des eingesetzten Werkzeugs zu verbessern. Auch ist es die Aufgabe eine Vorrichtung zu schaffen, welche erlaubt, das verbesserte Verfahren durchzuführen, um das zerspante Volumen pro Zeiteinheit zu verbessern und/oder den erforderlichen Energieeinsatz bezogen auf das zerspante Volumen zu reduzieren und/oder die Standzeit des eingesetzten Werkzeugs zu verbessern.

Die Aufgabe zu dem Verfahren wird mit den Merkmalen von Anspruch 1 gelöst.

Ein Ausführungsbeispiel der Erfindung betrifft ein Verfahren zur fräsenden Bearbeitung eines Werkstücks, mit einem rotierenden Fräskopf mit zumindest einem Werkzeug mit zumindest einer Schneide, wobei der rotierende Fräskopf mit dem zumindest einen Werkzeug mit der zumindest einen Schneide mit einer definierten Drehzahl betrieben wird und mit einer definierten Vorschubrichtung und mit einer definierten Vorschubgeschwindigkeit entlang des Werkstücks zum Spanabheben geführt wird, wobei dem eine hochfrequente und in der Richtung ausgerichtete Impulsbelastung überlagert wird. Durch die Überlagerung der Rotation des Fräskopfs mit der Impulsbelastung wird eine mechanische Unterstützungsfunktion zur bekannten Fräsbearbeitung erzielt, wobei in der Trennzone zur Spanabhebung ein dynamischer diskontinuierlicher Trennprozess eingeleitet wird, bei welchem die Kräfte in Richtung der Rissbildung wirken. Durch die überlagerten Impulse können dabei im Microbereich der Werkstoffstruktur die Zusammenhalt- und Widerstandskräfte beim Trennen deutlich reduziert werden bei gleichzeitiger Absenkung der mechanischen und thermischen Belastung der eingesetzten Werkzeuge.

Besonders vorteilhaft ist es, wenn die Impulsbelastung impulsartige Kraft- und/oder Impulsspitzen auf die zumindest eine Schneide bewirkt. Damit wird die Kraft- oder Impulseinleitung in Impulsform der Impulsbelastung auf die Schneide bewirkt, die den Fräsprozess zur spanenden Bearbeitung ausführt, so dass der klassischen spanenden Bearbeitung die Impulseinleitung als gerichtete Kraftwirkung bzw. als gerichtete Impulswirkung überlagert wird.

Besonders vorteilhaft ist es dabei, wenn die Impulsbelastung mit einer vordefinierten Amplitude erfolgt. Dadurch kann eine einstellbare Impulsbelastung vorgesehen werden, die beispielswiese in der Amplitude einstellbar, modulierbar und/oder auch ein- und ausschaltbar ist.

Besonders vorteilhaft ist es, wenn die Richtung der Impulsbelastung eindimensional oder mehrdimensional ist, wobei bei einer mehrdimensionalen Impulsbelastung die Impulsbelastung durch eine Kombination verschieden ausgerichteter Impulsbelastungen zusammengesetzt ist. Die Impulsbelastung wird dabei vektoriell verstanden, wobei die derartig betrachtete Impulsbelastung durch eine Kombination verschieden ausgerichteter vektorieller Impulsbelastungen zusammengesetzt sein kann.

Auch ist es zweckmäßig, wenn die Impulsbelastung durch eine longitudinale Impulsbelastung, eine transversale Impulsbelastung und/oder durch eine Torsionsimpulsbelastung zusammengesetzt ist. Dadurch können die vektoriellen Impulsbelastungen in ihre entsprechenden den Koordinaten eines Koordinatensystems ausgerichteten Impulsbelastungen aufgeteilt und angesteuert werden, insbesondere hinsichtlich Frequenz und Amplitude.

Besonders vorteilhaft ist es, wenn die Richtung des Impulsvektors, die Frequenz der Impulsbelastung und/oder die Amplitude der Impulsbelastung, insbesondere an die Wirkrichtung der schneidenspezifischen Schnittkräfte, anpassbar ist. Damit kann die erzeugte und wirkende Impulsbelastung ideal den wirkenden Schnittkräften an der Schneide überlagert werden, um die Spanabhebung zu verbessern.

Auch ist es bei einem Ausführungsbeispiel zweckmäßig, wenn die Richtung des Impulsvektors der Impulsbelastung einstellbar ist und/oder dass die Amplitude der longitudinalen Impulsbelastung und/oder die Amplitude der transversalen Impulsbelastung und/oder die Amplitude der Torsionsimpulsbelastung einstellbar ist oder sind. Dadurch kann die Impulsbelastung und deren Wirkung gezielt moduliert werden, um eine möglichst gute Wirksamkeit bezüglich der gestellten Aufgabe bzw. der gestellten Aufgaben erreichen zu können, wobei insbesondere diese Modulation auch einer sich ändernden Schnittrichtung folgend gestaltet werden kann.

Auch ist es zweckmäßig, wenn die Frequenz der Impulsbelastung einstellbar ist und/oder dass die Frequenz der longitudinalen Impulsbelastung und/oder die Frequenz der transversalen Impulsbelastung und/oder die Frequenz der Torsionsimpulsbelastung einstellbar ist oder sind. Damit kann vorteilhaft eine Anpassung an das zu bearbeitende Material und/oder der zu bearbeitenden Formgebung erfolgen.

Die Aufgabe zu der Vorrichtung wird mit den Merkmalen von Anspruch 9 gelöst.

Ein Ausführungsbeispiel der Erfindung betrifft eine Vorrichtung zur fräsenden Bearbeitung eines Werkstücks, mit einem rotierbaren Fräskopf mit zumindest einem Werkzeug mit zumindest einer Schneide, mit zumindest einem Antrieb zum Rotieren und Bewegen des Fräskopfs, wobei der rotierende Fräskopf mit dem zumindest einen Werkzeug mit der zumindest einen Schneide mit einer definierten Drehzahl betreibbar ist und mit einer definierten Vorschubrichtung und mit einer definierten Vorschubgeschwindigkeit entlang des Werkstücks zum Spanabheben führbar ist, weiterhin mit zumindest einem impulserzeugenden Aktuator, so dass dem Fräskopf eine hochfrequente und in der Richtung ausgerichtete Impulsbelastung überlagerbar ist. Durch die Überlagerung der Rotation des Fräskopfs mit der Impulsbelastung wird eine mechanische Unterstützungsfunktion zur bekannten Fräsbearbeitung erzielt, wobei in der Trennzone zur Spanabhebung ein dynamischer diskontinuierlicher Trennprozess eingeleitet wird, bei welchem die Kräfte in Richtung der Rissbildung wirken. Durch die überlagerten Impulse können dabei im Microbereich der Werkstoffstruktur die Zusammenhalt- und Widerstandskräfte beim Trennen deutlich reduziert werden bei gleichzeitiger Absenkung der mechanischen und thermischen Belastung der eingesetzten Werkzeuge. Die erfindungsgemäße Vorrichtung erlaubt die Durchführung des erfindungsgemäßen Verfahrens. Dabei kann die Durchführung des erfindungsgemäßen Verfahrens ein- oder ausgeschaltet sein, je nach Bedarf. Beispielsweise kann bei einem Feinschlichten die Impulsbelastung der Schneide ausgeschaltet werden.

Besonders vorteilhaft ist es, wenn die Impulsbelastung impulsartige Kraft- und/oder Impulsspitzen auf die zumindest eine Schneide bewirkt, wobei die Impulsbelastung mit einer vordefinierten Amplitude erfolgt. Entsprechend wird eine einstellbare erwünschte Impulswirkung an der Schneide erreicht.

So ist es auch vorteilhaft, wenn die Richtung der von dem impulserzeugenden Aktuator erzeugte Impulsbelastung, der Impulsvektor, eindimensional oder mehrdimensional ist, wobei bei einer mehrdimensionalen Impulsbelastung die Impulsbelastung durch eine Kombination verschieden ausgerichteter Impulsbelastungen, insbesondere Impulsvektoren, zusammengesetzt ist, insbesondere die Impulsbelastung durch eine longitudinale Impulsbelastung, eine transversale Impulsbelastung und/oder durch eine Torsionsimpulsbelastung zusammengesetzt ist. Dadurch kann die Impulsbelastung im Hinblick auf das aktuell zu bearbeitende Werkstück und die aktuell verwendete Schneide bzw. das aktuell verwendete Werkzeug eingestellt und optimiert werden.

Besonders vorteilhaft ist es, wenn die Richtung des von dem impulserzeugenden Aktuator erzeugten Impulsvektors, die Frequenz der Impulsbelastung und/oder die Amplitude der Impulsbelastung, insbesondere an die Wirkrichtung der schneidenspezifischen Schnittkräfte, einstellbar ist. Damit wird eine auf die jeweiligen Bedürfnisse einstallbare Wirkung möglich, was zu einer deutlichen Verbesserung führt.

Auch ist es vorteilhaft, wenn der impulserzeugende Aktuator als Baueinheit ausgebildet ist oder eine Mehrzahl von impulserzeugenden Aktuatoren vorgesehen und angeordnet sind. Dadurch lässt sich eine kompakte Einheit schaffen.

Auch ist es zweckmäßig, wenn der zumindest eine impulserzeugende Aktuator in einer Werkzeugaufnahme des Fräskopfs und/oder des Werkzeugs angeordnet ist und/oder dass der zumindest eine impulserzeugende Aktuator derart angeordnet ist, dass er oder sie auf die Werkzeugaufnahme und/oder auf den Fräskopf und/oder auf das Werkzeug wirkt oder wirken. So kann ebenfalls eine kompakte und verbesserte Vorrichtung geschaffen werden.

Auch ist es zweckmäßig, wenn der zumindest eine impulserzeugende Aktuator in einem Grundkörper des Fräskopfs und/oder des Werkzeugs angeordnet ist und/oder dass der zumindest eine impulserzeugende Aktuator in oder an einer Haltevorrichtung für das Werkstück angeordnet ist. Auch dadurch kann eine kompakte und verbesserte Vorrichtung geschaffen werden.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnung näher erläutert. Es zeigt:

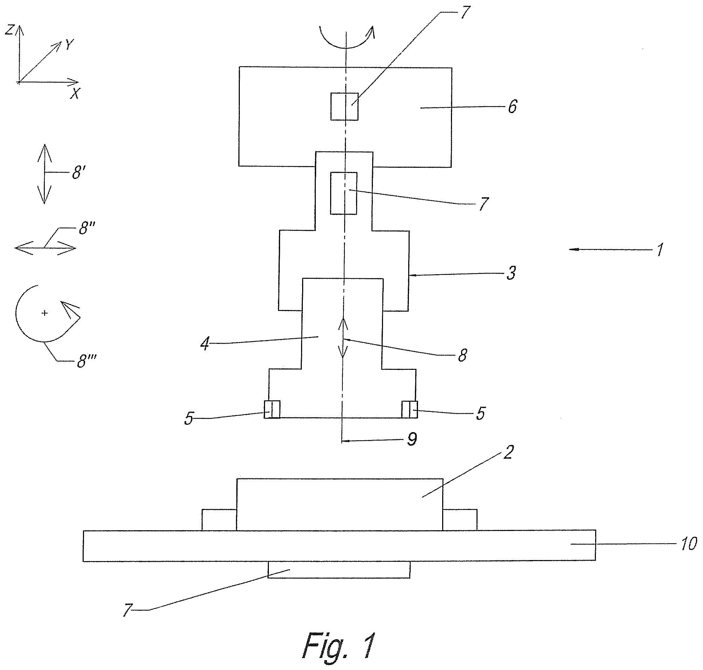

- Fig. 1: eine schematische Darstellung eines Ausführungsbeispiels einer erfindungsgemäßen Vorrichtung.

### Bevorzugte Ausführung der Erfindung

Die Figur 1 zeigt in einer schematischen Darstellung eine Vorrichtung 1 zur fräsenden, also spanabhebenden, Bearbeitung eines Werkstücks 2, wobei das Werkstück 2 in der Vorrichtung 1 befestigt angeordnet ist, insbesondere eingespannt ist.

Die Vorrichtung 1 weist einen rotierbaren, also drehantreibbaren, und insbesondere dreidimensional verfahrbaren Fräskopf 3 mit zumindest einem Werkzeug 4 mit zumindest einer Schneide 5 auf.

Die Vorrichtung 1 weist zumindest einen Antrieb 6 zum Rotieren und Bewegen des Fräskopfs 3 auf. Dabei ist der rotierbare Fräskopf 3 mit dem zumindest einen Werkzeug 4 mit der zumindest einen Schneide 5, insbesondere mit mehreren Schneiden 5, mit einer definierten Drehzahl n betreibbar und mit einer definierten Vorschubrichtung VR und mit einer definierten Vorschubgeschwindigkeit v entlang des Werkstücks 2 zum Spanabheben führbar. So können verschiedene Bedingungen bezüglich Drehzahl n, Vorschubrichtung VR und/oder der Vorschubgeschwindigkeit v zum Fräsen des Werkstücks 2 mittels des Werkzeugs 4 eingestellt und genutzt werden. Dabei können die Bedingungen auch während des Bearbeitens bei Bedarf auch angepasst werden. Die Vorschubrichtung kann dabei dreidimensional in der x-Richtung, y-Richtung, z-Richtung gewählt werden. Alternativ kann dies auch in anderen Koordinaten dargestellt werden.

Weiterhin ist zumindest ein impulserzeugender Aktuator 7 vorgesehen, so dass dem Fräskopf 3 eine hochfrequente und in der Richtung ausgerichtete Impulsbelastung 8 überlagerbar ist.

Damit werden gemäß dem Gedanken der Erfinder als eine Impulsbelastung 8 impulsartige Kraft- und/oder Impulsspitzen auf die zumindest eine Schneide 5 bewirkt, wobei die Impulsbelastung 8 mit einer vordefinierten, einstellbaren Amplitude Kraft- und/oder Impulsspitzen erfolgt.

Damit werden gemäß dem Gedanken der Erfinder als eine Impulsbelastung 8 impulsartige Kraft- und/oder Impulsspitzen auf die zumindest eine Schneide 5 bewirkt, wobei die Impulsbelastung 8 mit einer vordefinierten, einstellbaren Leistung erfolgt.

Besonders vorteilhaft ist es, wenn die Richtung der von dem impulserzeugenden Aktuator 7 erzeugte Impulsbelastung 8, der Impulsvektor, eindimensional oder mehrdimensional ist, wobei bei einer mehrdimensionalen Impulsbelastung 8 die Impulsbelastung 8 durch eine Kombination verschieden ausgerichteter Impulsbelastungen 8, insbesondere Impulsvektoren, zusammengesetzt ist oder zusammensetzbar ist, insbesondere die Impulsbelastung 8 durch eine longitudinale Impulsbelastung 8', eine transversale Impulsbelastung 8" und/oder durch eine Torsionsimpulsbelastung 8‴ zusammengesetzt ist. Dabei bezieht sich diese beschriebene Impulsbelastung 8 auf ein Koordinatensystem bezüglich der Drehachse 9 des Werkzeugs 4. Die Impulsbelastung 8 kann beispielsweise auch in anderen Koordinaten angegeben werden, beispielsweise in x, y, z-Koordinaten. Besonders vorteilhaft ist es, wenn die Richtung des von dem zumindest einen impulserzeugenden Aktuator 7 erzeugten Impulsvektors, die Frequenz der Impulsbelastung 8, die Leistung und/oder die Amplitude der Impulsbelastung 8, insbesondere an die Wirkrichtung der schneidenspezifischen Schnittkräfte, einstellbar ist.

Gemäß einem Ausführungsbeispiel ist der impulserzeugende Aktuator 7 als Baueinheit ausgebildet. Alternativ kann auch eine Mehrzahl von impulserzeugenden Aktuatoren 7 vorgesehen und angeordnet sein, wie dies Figur 1 beispielhaft zeigt.

Insgesamt kann es vorteilhaft sein, wenn der zumindest eine impulserzeugende Aktuator 7 in einer Werkzeugaufnahme des Fräskopfs 3, also im Fräskopf 3 und/oder im Antrieb 6, und/oder des Werkzeugs 4 angeordnet ist und/oder dass der zumindest eine impulserzeugende Aktuator 7 derart angeordnet ist, dass er oder sie auf die Werkzeugaufnahme und/oder auf den Fräskopf 3 und/oder auf das Werkzeug 4 wirkt oder wirken.

Es kann der zumindest eine impulserzeugende Aktuator 7 in einem Grundkörper des Fräskopfs 3 und/oder des Werkzeugs 4 angeordnet sein und/oder kann der zumindest eine impulserzeugende Aktuator 7 in oder an einer Haltevorrichtung 10 für das Werkstück 2 angeordnet sein.

Mit einer solchen Vorrichtung 1 kann ein Verfahren zur fräsenden Bearbeitung eines Werkstücks 2, mit einem rotierenden Fräskopf 3 mit zumindest einem Werkzeug 4 mit zumindest einer Schneide 5 durchgeführt werden, bei welchem der rotierende Fräskopf 3 mit dem zumindest einen Werkzeug 4 mit der zumindest einen Schneide 5 mit einer definierten Drehzahl n betrieben wird und mit einer definierten Vorschubrichtung VR und mit einer definierten Vorschubgeschwindigkeit v entlang des Werkstücks 2 zum Spanabheben geführt wird, wobei der fräsenden Bearbeitung eine hochfrequente und in der Richtung ausgerichtete Impulsbelastung 8 überlagert wird.

Damit wird erreicht, dass die Impulsbelastung 8 impulsartige Kraft- und/oder Impulsspitzen auf die zumindest eine Schneide 5 bewirkt und somit ein hochfrequenter diskontinuierlicher Trennprozess eingeleitet wird und durchgeführt wird, bei dem die Kräfte in Richtung der Rissbildung im Werkstück 2 in Kontaktphasen und in kontaktreduzierten Phasen wirken. Durch die überlagerten Kraftimpulse der Impulsbelastung werden im Microbereich der Werkstoffstruktur die Zusammenhalts- und Widerstandskräfte beim Trennen deutlich reduziert, bei gleichzeitiger Absenkung der mechanischen und thermischen Belastungen der eingesetzten Werkzeuge. Entsprechend können die Schnittkräfte aufgrund der eingesetzten Kraftimpulse deutlich reduziert werden. Testdurchführungen zeigen Reduktionen der Schnittkräfte um etwa 25%. Damit kann auch eine Erhöhung der Schnittgeschwindigkeiten um 20% einhergehen, wobei auch eine Reduktion des aufzuwendenden Energieeinsatzes von bis zu 25 % erreicht werden kann.

Dabei ist es je nach Werkstück 2 und Werkzeug zweckmäßig, wenn die Impulsbelastung 8 mit einer vordefinierten, einstellbaren Amplitude erfolgt. So kann eine optimierte Anpassung erfolgen.

Bevorzugt ist die Richtung der Impulsbelastung 8 eindimensional oder mehrdimensional, wobei bei einer mehrdimensionalen Impulsbelastung 8 die Impulsbelastung 8 durch eine Kombination verschieden ausgerichteter Impulsbelastungen 8',8", 8‴ zusammengesetzt ist. So kann die Impulsbelastung 8 beispielsweise auch an die Schnittrichtung und/oder die Schnittkräfte des Fräsprozesses angepasst werden. So kann die Impulsbelastung 8 durch eine longitudinale Impulsbelastung 8', eine transversale Impulsbelastung 8" und/oder durch eine Torsionsimpulsbelastung 8‴ zusammengesetzt sein.

Besonders vorteilhaft ist bei dem Verfahren, dass die Richtung des Impulsvektors der Impulsbelastung 8, die Frequenz der Impulsbelastung 8 und/oder die Amplitude der Impulsbelastung 8, insbesondere an die Wirkrichtung der schneidenspezifischen Schnittkräfte, anpassbar ist oder sind.

Auch ist es entsprechend vorteilhaft, wenn die Richtung des Impulsvektors der Impulsbelastung 8 einstellbar ist und/oder dass die Amplitude der longitudinalen Impulsbelastung 8' und/oder die Amplitude der transversalen Impulsbelastung 8" und/oder die Amplitude der Torsionsimpulsbelastung 8‴ einstellbar ist oder sind, insbesondere getrennt einstellbar ist oder sind.

Auch ist es entsprechend vorteilhaft, wenn die Frequenz der Impulsbelastung 8 einstellbar ist und/oder dass die Frequenz der longitudinalen Impulsbelastung 8' und/oder die Frequenz der transversalen Impulsbelastung 8" und/oder die Frequenz der Torsionsimpulsbelastung 8‴ einstellbar ist oder sind, insbesondere getrennt einstellbar ist oder sind.

Besonders vorteilhaft ist es, wenn die Variablen der Impulsbelastung die Wirkrichtung, die Leistung, die Frequenz und/oder die Amplitude sind. Diese Variablen können mittels vorteilhafter Voreinstellungen der Parameter vorgewählt werden, beispielsweise in Abhängigkeit des zu zerspanenden Werkstoffs und/oder einzusetzenden Werkzeugs, wie des einzusetzenden Fräswerkzeugs.

### Bezugszeichenliste

- 1: Vorrichtung
- 2: Werkstück
- 3: Fräskopf
- 4: Werkzeug
- 5: Schneide
- 6: Antrieb
- 7: Aktuator
- 8: Impulsbelastung
- 8': longitudinale Impulsbelastung
- 8": transversale Impulsbelastung
- 8‴: Torsionsimpulsbelastung
- 9: Drehachse
- 10: Haltevorrichtung

## Patentansprüche

1. Verfahren zur fräsenden Bearbeitung eines Werkstücks (2), mit einem rotierenden Fräskopf (3) mit zumindest einem Werkzeug (4) mit zumindest einer Schneide (5), wobei der rotierende Fräskopf (3) mit dem zumindest einen Werkzeug (4) mit der zumindest einen Schneide (5) mit einer definierten Drehzahl betrieben wird und mit einer definierten Vorschubrichtung und mit einer definierten Vorschubgeschwindigkeit entlang des Werkstücks (2) zum Spanabheben geführt wird, wobei dem eine hochfrequente und in der Richtung ausgerichtete Impulsbelastung (8) überlagert wird.

2. Verfahren nach Anspruch 1, **dadurch gekennzeichnet, dass** die Impulsbelastung (8) impulsartige Kraft- und/oder Impulsspitzen auf die zumindest eine Schneide (5) bewirkt.

3. Verfahren nach Anspruch 1 oder 2, **dadurch gekennzeichnet, dass** die Impulsbelastung (8) mit einer vordefinierten Amplitude und/oder Leistung erfolgt.

4. Verfahren nach einem der vorhergehenden Ansprüche, **dadurch gekennzeichnet, dass** die Richtung der Impulsbelastung (8) eindimensional oder mehrdimensional ist, wobei bei einer mehrdimensionalen Impulsbelastung (8) die Impulsbelastung (8) durch eine Kombination verschieden ausgerichteter Impulsbelastungen (8) zusammengesetzt ist.

5. Verfahren nach Anspruch 4, **dadurch gekennzeichnet, dass** die Impulsbelastung (8) durch eine longitudinale Impulsbelastung (8'), eine transversale Impulsbelastung (8") und/oder durch eine Torsionsimpulsbelastung (8‴) zusammengesetzt ist.

6. Verfahren nach einem der vorhergehenden Ansprüche, **dadurch gekennzeichnet, dass** die Richtung des Impulsvektors, die Frequenz der Impulsbelastung (8) und/oder die Amplitude der Impulsbelastung (8), insbesondere an die Wirkrichtung der schneidenspezifischen Schnittkräfte, anpassbar ist.

7. Verfahren nach einem der vorhergehenden Ansprüche, **dadurch gekennzeichnet, dass** die Richtung des Impulsvektors der Impulsbelastung (8) einstellbar ist und/oder dass die Amplitude der longitudinalen Impulsbelastung (8') und/oder die Amplitude der transversalen Impulsbelastung (8") und/oder die Amplitude der Torsionsimpulsbelastung (8‴) einstellbar ist oder sind.

8. Verfahren nach einem der vorhergehenden Ansprüche, **dadurch gekennzeichnet, dass** die Frequenz der Impulsbelastung (8) einstellbar ist und/oder dass die Frequenz der longitudinalen Impulsbelastung (8') und/oder die Frequenz der transversalen Impulsbelastung (8") und/oder die Frequenz der Torsionsimpulsbelastung (8‴) einstellbar ist oder sind.

9. Vorrichtung (1) zur fräsenden Bearbeitung eines Werkstücks (2), mit einem rotierbaren Fräskopf (3) mit zumindest einem Werkzeug (4) mit zumindest einer Schneide (5), mit zumindest einem Antrieb (6) zum Rotieren und Bewegen des Fräskopfs (3), wobei der rotierende Fräskopf (3) mit dem zumindest einen Werkzeug (4) mit der zumindest einen Schneide (5) mit einer definierten Drehzahl betreibbar ist und mit einer definierten Vorschubrichtung und mit einer definierten Vorschubgeschwindigkeit entlang des Werkstücks (2) zum Spanabheben führbar ist, weiterhin mit zumindest einem impulserzeugenden Aktuator (7), so dass dem Fräskopf (3) eine hochfrequente und in der Richtung ausgerichtete Impulsbelastung (8) überlagerbar ist.

10. Vorrichtung (1) nach Anspruch 9, **dadurch gekennzeichnet, dass** die Impulsbelastung (8) impulsartige Kraft- und/oder Impulsspitzen auf die zumindest eine Schneide (5) bewirkt, wobei die Impulsbelastung (8) mit einer vordefinierten Amplitude und/oder Leistung erfolgt.

11. Vorrichtung (1) nach einem der vorhergehenden Ansprüche 9 oder 10, **dadurch gekennzeichnet, dass** die Richtung der von dem impulserzeugenden Aktuator (7) erzeugte Impulsbelastung (8), der Impulsvektor, eindimensional oder mehrdimensional ist, wobei bei einer mehrdimensionalen Impulsbelastung (8) die Impulsbelastung (8) durch eine Kombination verschieden ausgerichteter Impulsbelastungen (8), insbesondere Impulsvektoren, zusammengesetzt ist, insbesondere die Impulsbelastung (8) durch eine longitudinale Impulsbelastung (8'), eine transversale Impulsbelastung (8") und/oder durch eine Torsionsimpulsbelastung (8‴) zusammengesetzt ist.

12. Vorrichtung (1) nach einem der vorhergehenden Ansprüche 9 bis 11, **dadurch gekennzeichnet, dass** die Richtung des von dem impulserzeugenden Aktuator (7) erzeugten Impulsvektors, die Frequenz der Impulsbelastung (8) und/oder die Amplitude der Impulsbelastung (8), insbesondere an die Wirkrichtung der schneidenspezifischen Schnittkräfte, einstellbar ist.

13. Vorrichtung (1) nach einem der vorhergehenden Ansprüche 9 bis 12, **dadurch gekennzeichnet, dass** der impulserzeugende Aktuator (7) als Baueinheit ausgebildet ist oder eine Mehrzahl von impulserzeugenden Aktuatoren (7) vorgesehen und angeordnet sind.

14. Vorrichtung (1) nach einem der vorhergehenden Ansprüche 9 bis 13, **dadurch gekennzeichnet, dass** der zumindest eine impulserzeugende Aktuator (7) in einer Werkzeugaufnahme des Fräskopfs (3) und/oder des Werkzeugs (4) angeordnet ist und/oder dass der zumindest eine impulserzeugende Aktuator (7) derart angeordnet ist, dass er oder sie auf die Werkzeugaufnahme und/oder auf den Fräskopf (3) und/oder auf das Werkzeug (4) wirkt oder wirken.

15. Vorrichtung (1) nach einem der vorhergehenden Ansprüche 9 bis 13, **dadurch gekennzeichnet, dass** der zumindest eine impulserzeugende Aktuator (7) in einem Grundkörper des Fräskopfs (3) und/oder des Werkzeugs (4) angeordnet ist und/oder dass der zumindest eine impulserzeugende Aktuator (7) in oder an einer Haltevorrichtung (10) für das Werkstück (2) angeordnet ist.
